# EUROPEAN PATENT SPECIFICATION

(11) **EP 1 139 531 B1**
(45) Date of publication and mention of the grant of the patent: **01.02.2006**
(21) Application number: 01107907.6
(22) Date of filing: 28.03.2001
(51) Int. Cl.: H02B 1/056

(54) **Electricity supply assembly**
Stromversorgungsanordnung
Ensemble de distribution d'électricité

(30) Priority: 29.03.2000 GB 0007457; 23.12.2000 GB 0031604
(43) Date of publication of application: 04.10.2001
(73) Proprietor: Electrium Sales Limited, Brownhills, WS8 6JZ (GB)
(72) Inventor: Currie, James, Liverpool, L16 8NA (GB); Verschueren, Philip, Didsdury, Manchester, M20 5ND (GB); Connor, Stephen John, Droylsden, Manchester, M35 6FR (GB)
(74) Representative: Lally, William

(56) References cited:
- EP-A- 0 859 438
- US-A- 5 046 173

## Description

### Description of Invention

This invention is concerned with improvements relating to electricity supply assemblies, particularly of the kind (hereinafter referred to as being of the kind specified) utilising circuit breakers of the kind comprising a generally flat, parallel-sided body which is provided on the underside thereof with a mounting recess which in use may be positioned over and engaged with a mounting rail, with a primary plane of the circuit breaker, extending parallel to the flat sides, extending at right angles to the length of the mounting rail.

A conventionally used mounting rail, termed a "din-rail" is of inverted top-hat cross-section comprising parallel upwardly facing walls and narrow outwardly-turned flanges.

Conventionally the circuit breaker is provided on the underside thereof with a projection which may be engaged beneath one of the outwardly-turned flanges of the mounting rail, and the mounted recess in the underside of the circuit breaker positioned over and engaged with the flanges of the din-rail.

There is described in the specification of our European patent 0 472409 an electricity supply assembly of the kind specified, comprising an elongate housing mounted adjacent to the mounting rail, and an elongate supply member located in the housing, the housing being provided with a plurality of openings and the supply member having a contact surface extending in the longitudinal direction parallel to the length of the mounting rail, each circuit breaker comprising a contact member projecting from an underside of the circuit breaker, wherein when the circuit breaker is mounted on the mounting rail, the contact member passes through one of the openings into the housing, and into face-to-face engagement with the supply member.

The electricity supply assembly of the kind described above has been found to be very satisfactory, in that it combines a simplicity of mounting with a high degree of safety, and in particular enables a user of the assembly to remove a circuit breaker from the assembly, and to mount new circuit breakers on the mounting rail, without interruption of the supply of electricity to the supply assembly, as may interfere with other circuits controlled by the supply assembly.

The supply assembly of the kind described in our European patent cannot however be utilised to control a multi-phase supply, or to control and single phase supply in which both the live and neutral lines are switched, and whilst a domestic consumer, conventionally using a single phase supply, will be permitted the convenience of the use of said supply assembly without requiring the services of a skilled electrician, a commercial or industrial consumer will in general be required to shut down the supply of electricity to the supply assembly, when it is necessary to exchange circuit breakers on the mounting rail.

Suggestions have been made to control a multi-phase supply by utilising a circuit breaker having a contact member which projects from the underside thereof, and which is slidably mounted, whereby the distance by which the contact member is spaced from the side edge of the circuit breaker may be varied. In this manner, the circuit breaker can be mounted on a selected one of a number of spaced supply connections whereby power in the phase supplied by that supply connection may be controlled.

However conventional plug-in power supply assemblies which are capable of handling multi-phase supply do not have the advantages of safety and convenience of use provided by the supply assembly in accordance with the aforementioned European patent, and it is one of the various objects of this invention to provide a supply assembly, generally in accordance with the teachings of said European patent, which is so capable.

It is another of the various objects of this invention to provide an electricity supply assembly which utilises the convenient, conventional mounting rail of inverted top-hat cross-section.

EP 0859438 discloses an electrical distribution board in which the consumer switches can be plugged into the distribution bars, by means of the interposition of modular support adaptors. However, such a distribution board cannot be used with a circuit breaker having a contact member which projects from the underside of the circuit breaker.

GB 2312797 A disclosed an electrical distribution board on which is mounted a plurality of circuit breakers. These are connected via connectors to electrical connectors, or busbars, for the supply of electricity thereto. The circuit breakers do not, however, have downwardly-projecting contact members.

GB 2310768 A discloses an assembly for use in a wall mountable electrical consumer unit. Circuit breakers are connected to interface cassettes, which connect to one of a series of busbars, for supply of electricity to the circuit breakers. Again, however, the circuit breakers do not comprise downwardly-projecting contact members.

According to this invention there is provided an electricity supply assembly adapted for use with at least one circuit breaker, the supply assembly comprising:
a) a housing;
b) a plurality of elongate supply members secured to the housing in side-by-side parallel relationship; and
c) a plurality of elongate connector members extending transversely of the supply members and being secured thereto in sequence such that adjacent connector members are secured to different supply members, each connector member being provided with a connection portion, characterised in that the housing is provided with a plurality of wall members defining pockets, and a connection portion of a connector member is located in each pocket.

The circuit breaker may comprise a contact member which projects from an underside of the circuit breaker and which provides a surface which extends at right angles to a main plane of the circuit breaker which lies parallel to side walls of the circuit breaker. The housing of the electricity supply assembly may provide a mounting means for the circuit breaker. Each connector member may be provided with a connection surface against which the contact member of the circuit breaker may be engaged, when the circuit breaker is on the mounting means. Each connector member may be provided with a connection surface, and the connection surface of each connector member may lie in a plane which extends at right angles to the length of the connector member and which lies parallel to the supply members, and located to one side thereof.

Thus a circuit breaker of the kind set out in the specification of our European patent may be brought into conductive engagement with one of the supply members by locating the circuit breaker transversely of the supply members and bringing the contact member into face-to-face engagement with the connection surface of one of the connector members.

In a configuration of the kind set out above, without the need for any additional insulation means, connector members of a convenient rectangular cross-section may be utilised, typically having cross-sectional dimensions which differ by a factor of between 2 and 10, conveniently between 4 and 8, preferably about 5, enabling connector members to be utilised which are capable of carrying relatively high currents (viz. greater than 50 amps), which may be located side by side, occupying a width-wise space of less than that of the conventional circuit breaker.

Thus the housing may provide or have secured thereto a mounting means enabling a conventional circuit breaker to be secured thereto with the contact member passing into face-to-face (conductive) engagement with the connector members, conveniently the mounting means being afforded by a conventional - "inverted top-hat" configuration (known in the UK as a "din-rail") or formations which are functionally equivalent. Alternatively the housing may provide a mounting means of "half din-rail" configuration.

Where the supply members are connected to different phases of an electricity supply, by selection of the longitudinal position of the circuit breaker in relation to the supply members, the circuit breaker may be brought into operative relationship with desired connector member, and thus with a selected phase of the supply current.

Similarly by utilising a double pole circuit breaker, comprising two contact members protruding from the underside thereof with their contact surfaces lying in spaced relationship in a common place, two phases of the current may be controlled by a single circuit breaker, the two phases being selected by an appropriate longitudinal positioning of the circuit breaker in respect of the housing.

Similarly, a three phase current supply may be controlled by a triple circuit breaker.

Each connector member may thus be provided, on one side thereof, with a connection portion such as a leg extending at right angles to the length of the connector member which is accessible through a slot in the housing, conveniently a slot of dimensions sufficiently small as to provide "finger-proof" safety.

Preferably spring means is provided to urge a contact member inserted through such a slot into face-to-face contact with the connector member, conveniently afforded by a spring clip mounted on the connection portion.

Preferably the spring means is located in an output location or pocket, and is of generally U-shape, being capable of being mounted on the connection portion and retained thereon by the resilience of the clip, having a re-entrant end portion providing a lead into which a contact member may be inserted.

By the construction described above, a supply assembly controlling a multi-phase electricity supply may be utilised, having the convenience of assembly, and the safety criteria, associated with the single phase supply assembly described in the specification of our European patent.

Additionally, circuit breakers which are utilised in the single phase electricity supply may be utilised in a multi-phase supply of the present invention, without any adaptation, although of course only in relation to a single phase.

If desired, on the opposite side of each connector member (viz. the side thereof opposite to that upon which the connection surface is provided), the connector members may similarly be provided with connection surfaces, also lying in a plane parallel to the supply members and being located on the opposite side thereof. If desired, circuit breakers may thus be mounted on the supply assembly in one of two oppositely-facing orientations.

Preferably the assembly comprises mounting means, conveniently as aforesaid, to enable the circuit breakers to be mounted in one of two positions, conveniently being spaced width-wise, in one of two orientations, in each of which positions it will be connected to a supply of electricity.

If desirable, particularly where it is desired to utilise a switched neutral, one of the supply members may be utilised as a neutral connection.

Preferably however an additional supply member is incorporated, offset from the above mentioned array of supply members, to which the neutral connection may be made, and for this purpose conveniently a circuit breaker is utilised having an additional contact member protruding from the underside thereof in spaced parallel relationship with the said contact member.

Preferably the additional supply member is located in a supplementary housing extending length-wise of the supply assembly, in a manner similar to the supply assembly described in the specification of our European patent.

If desired the opposite sides of all of the contact members may be retained within the housing. Alternatively however, on opposite sides of some only of the connector members (eg. the first three where there are three supply members providing a three-phase supply), the connector members may be provided with formations to enable them to be connected in conventional manner to a supply of electricity, eg. by way of a three-phase isolator, whereby current may be supplied to the supply members and hence to the remainder of the connector members.

The housing of the supply member may be provided with a plurality of narrow slots, so positioned that when the circuit breaker is moved into operative engagement with the mounting means, the contact member passes through one of the slots, and into face-to-face engagement with the connection surface of one of the connector members.

Additionally there is a requirement for supply assemblies which comprise an array of electrical equipment, including for example circuit breakers, operating in single- or multi-phase mode, together with the conventional timers, switches, transformers and the like, together with an electricity supply which may be up to four-phase. In view of the complexities often required, such supply assemblies are conveniently pre-configured: however presently available designs provide difficulties in the building up of the assembly in a convenient and reliable manner, and such designs are not in general well suited to subsequent rearrangement to any different configuration.

The supply assembly may comprise
a) a housing member providing location means for the plurality of supply members and;
b) a plurality of output locations in the form of pockets disposed length-wise of the supply members and providing means into one of which the contact member of the circuit breaker may be located.

If desired, the housing member may be provided with a plurality of channels, one for each supply member, extending length-wise of the housing member, with each pocket being disposed width-wise of the supply members.

In use a circuit breaker or the like which is to be used may be mounted in position relative to the housing member and a contact member projecting therefrom enters one of the output locations into conductive contact with a connector member therein, and thus into conductive contact with the supply member from which the connector member extends.

Conveniently the housing member provides mounting means for such mounting of a circuit breaker, conveniently such mounting means being of the conventional "top-hat" section known as a "din-rail".

Thus conveniently the housing member comprises a cover member which may be mounted over the housing member when a desired assembly of components therein has been completed, the cover on the side thereof opposite to the housing member providing the mounting means.

Conveniently the connector members comprise two connector portions, one adapted to be located in one of the channels to be engaged with a supply member therein, one being adapted to be located in one of the pockets, and a bridge member adapted to be entered into conductive engagement with said two connector portions when so in position.

The pockets may be in columns, in each of which column a supply member extends, said supply member extending through the wall members defining the pockets. In this manner a connector portion may conveniently be entered into a pocket at a desired location, to be engaged with the supply member therein, and itself be engaged by a bridge member for connection to a similar connector portion provided in the corresponding output location. In this manner the connector portions need simply be dropped into the pockets, and are retained therein in a desired location automatically.

Alternatively, however, if desired the wall members of the housing member may provide for the convenient location of the connector members within the supply member channels, recesses or the like in the wall members being provided if desired to prevent undesired movement of the connector members length-wise of the channels.

There will now be given a detailed description, to be read with reference to the accompanying drawings, of an electricity supply assembly which is a preferred embodiment of this invention, having been selected for the purposes of illustrating the invention by way of example, said electrical supply assembly comprising a housing assembly which is also illustrative of the invention in certain of its aspects.

There will now be given a detailed description, to be read with reference to the accompanying drawings, of various electricity supply assemblies which are preferred embodiments of this invention, having been selected for the purposes of illustrating the invention by way of example.

In the accompanying drawings:
FIGURE 1 is an exploded perspective view of the supply assembly which is the first embodiment of this invention;
FIGURE 2 is a sectional view of the assembly, showing the mounting of a circuit breaker thereon;
FIGURE 3 is an exploded perspective view of the supply assembly which is the second embodiment of this invention;
FIGURE 4 is a sectional view of the assembly, showing the mounting of a circuit breaker thereon;
FIGURE 5 is a vertically exploded perspective view of the electricity supply assembly which is the third embodiment of this invention;
FIGURE 6 is a view illustrating the building of the third embodiment from a kit of parts;
FIGURE 7 is a perspective view of part of the third embodiment;
FIGURE 8 is an end elevation showing a circuit breaker mounted in position on the housing assembly of Figure 7; and
FIGURE 9 is a plan view showing the circuit mounted in position on the housing assembly.

The supply assembly which is the first embodiment of this invention is similar in many respects to the supply assembly the subject of European patent EP 0 472409 B, and will be described hereinafter primarily insofar as it differs from the supply assembly of said European patent. For details of construction, operation and use not mentioned herein, reference should be made to the specification of said European patent.

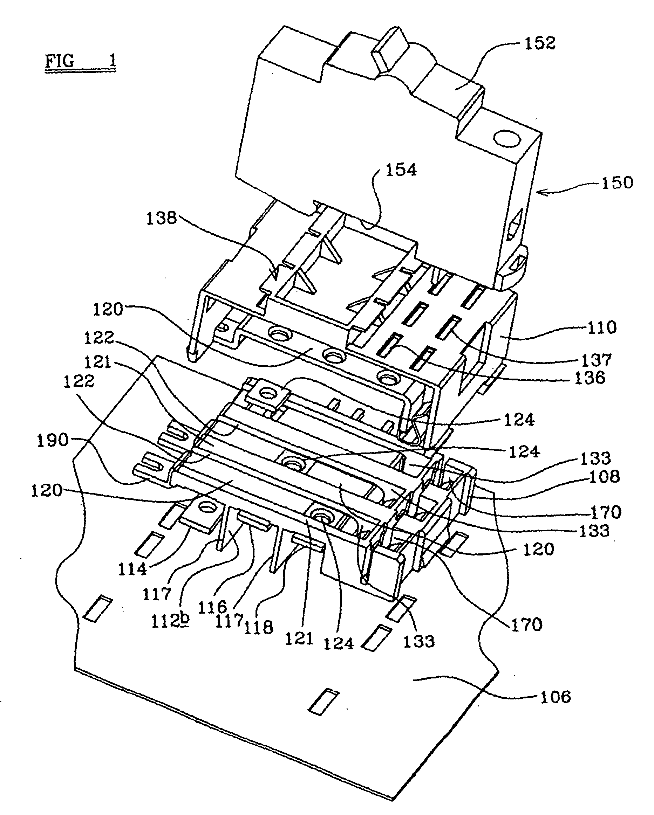

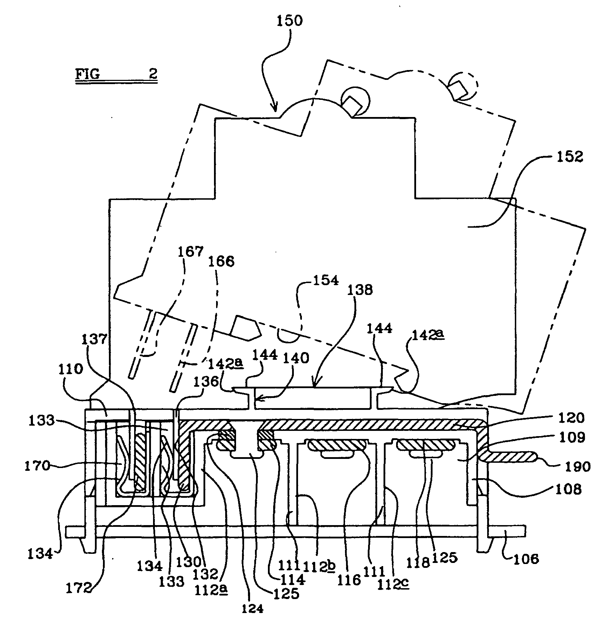

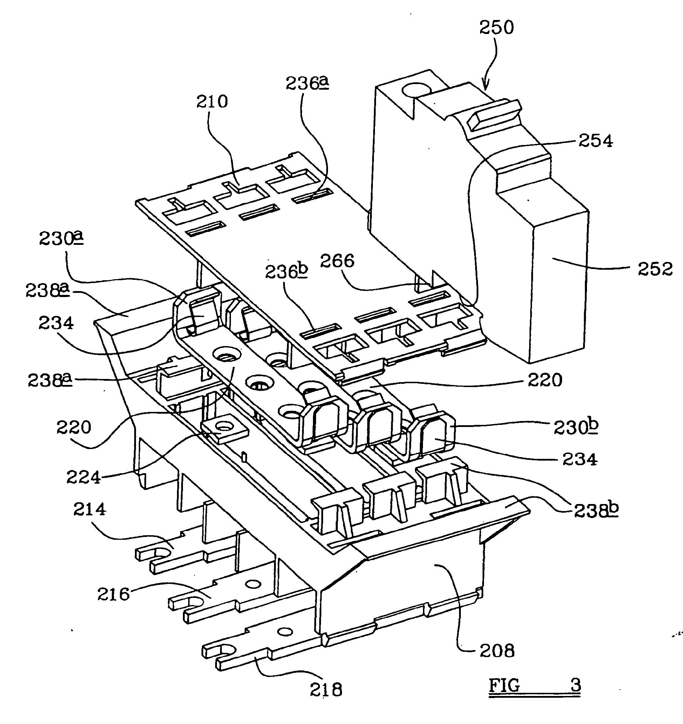

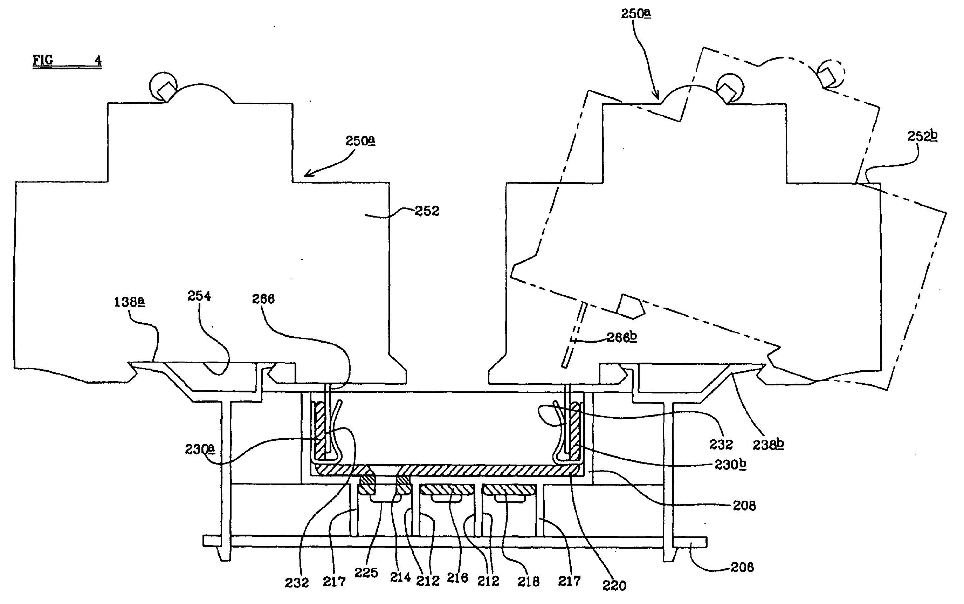

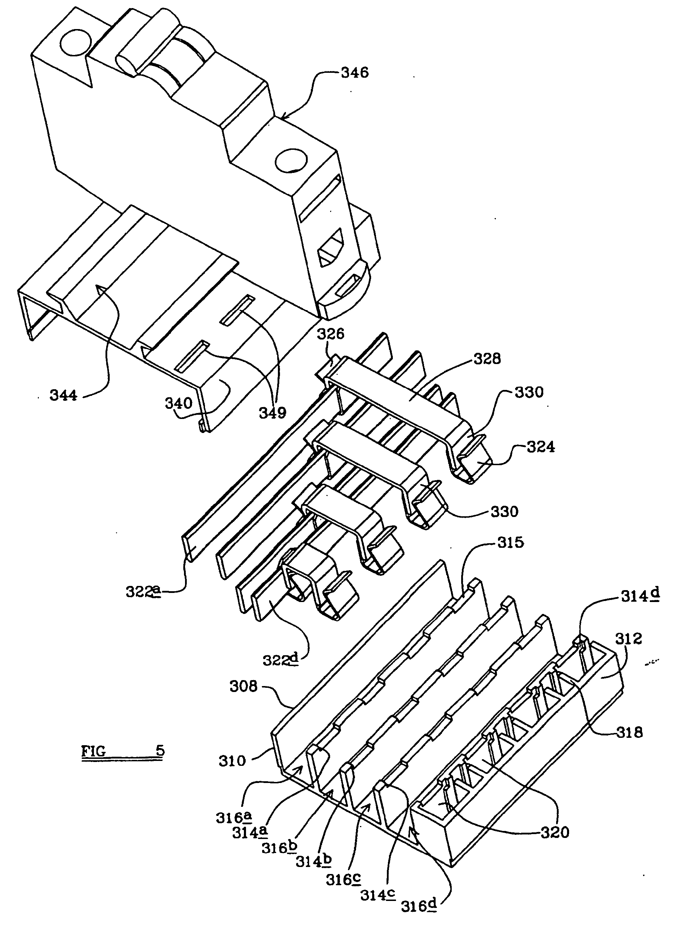

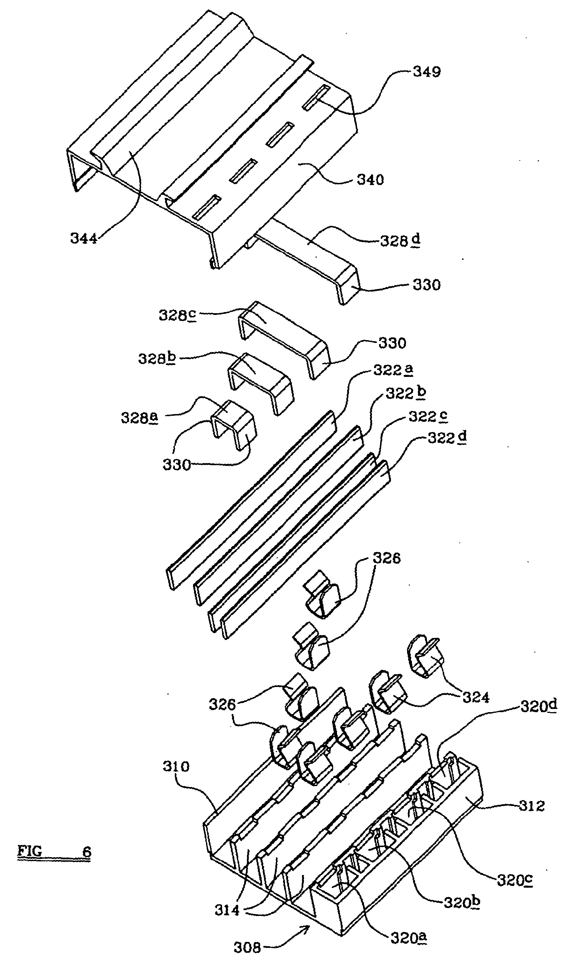

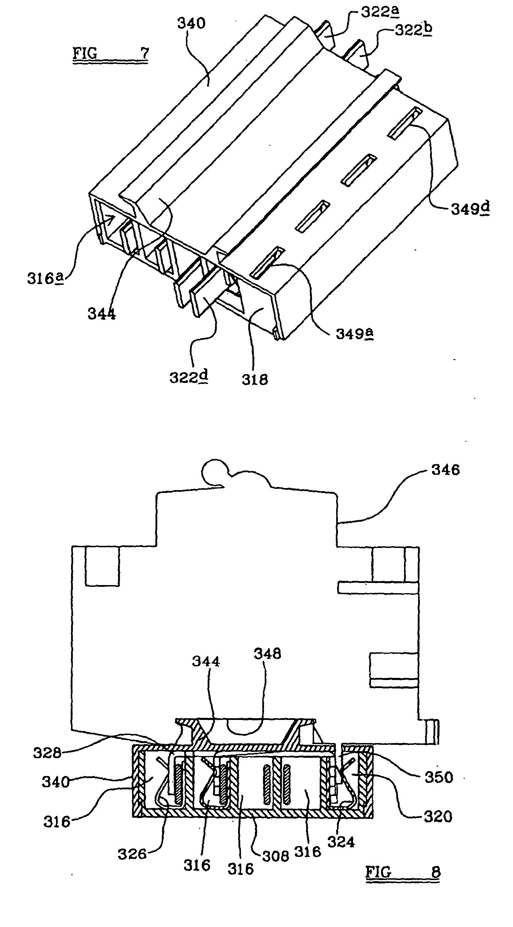

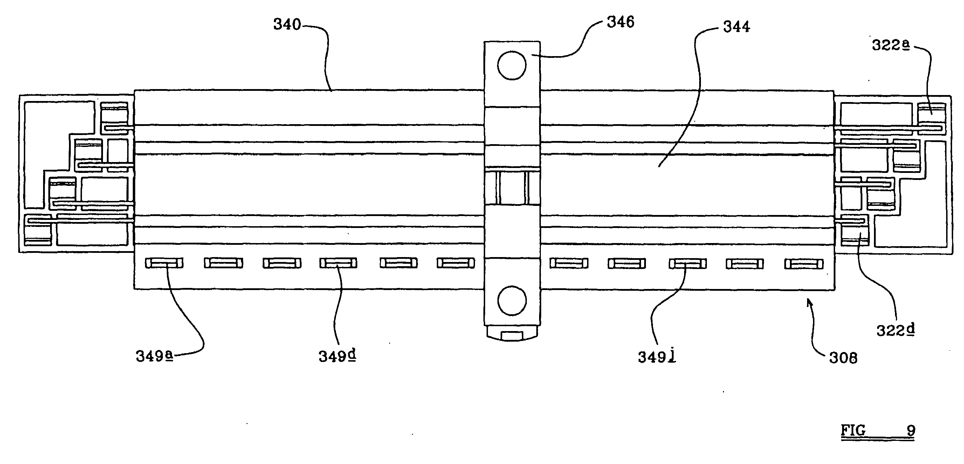

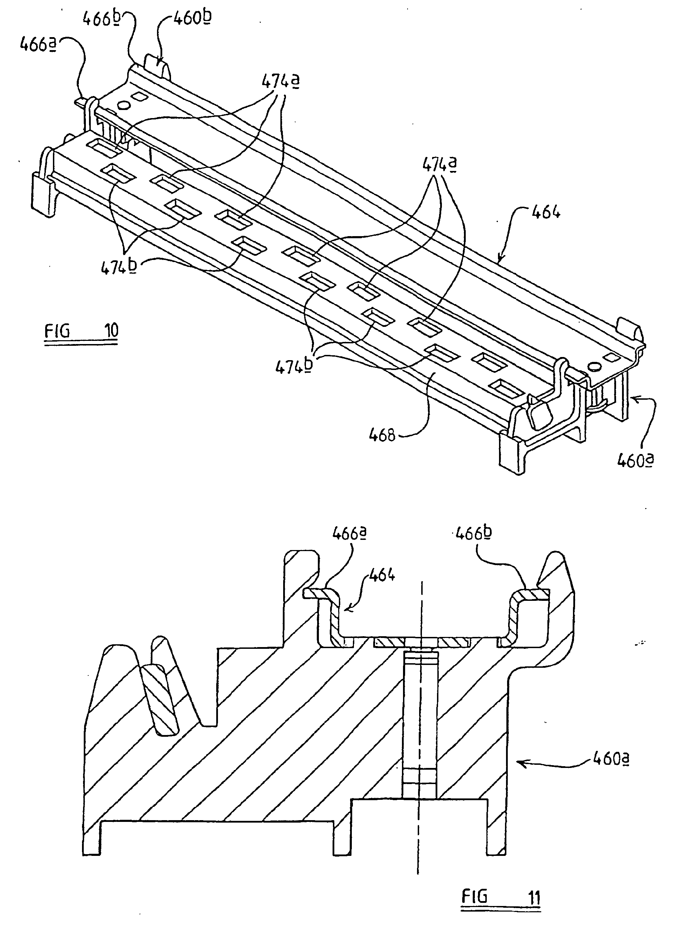

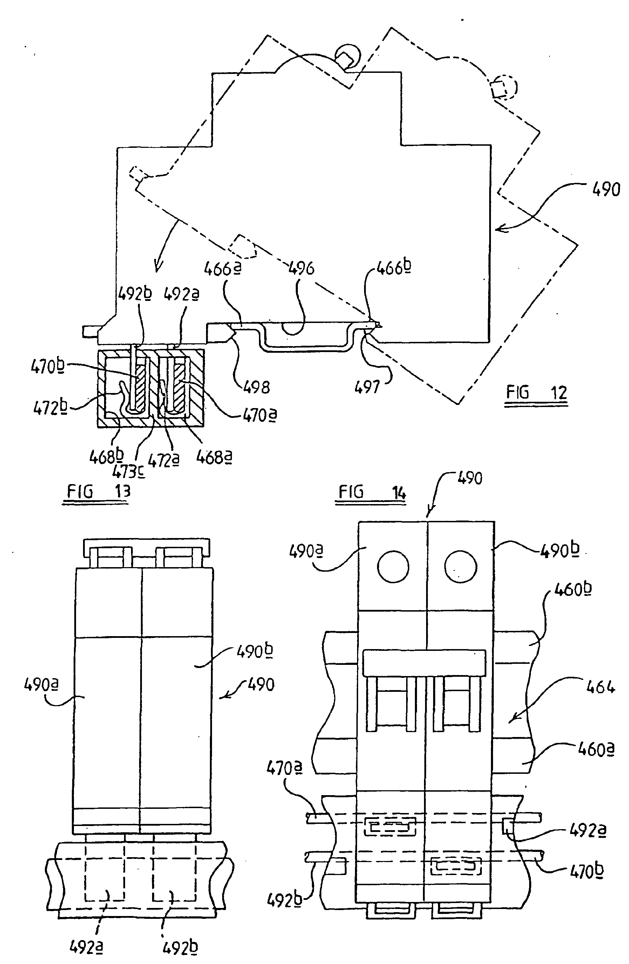

The supply assembly which is the first embodiment of this invention, illustrated in Figures 1 and 2, comprises a first base plate 106, and an elongate housing 108 mounted on the base plate, the housing 108 comprising a cover 110.

On the underside the cover 110 is provided with a cavity 109, divided by longitudinal ribs 117 into channels 112a, 112b and 112c, in each of which an elongate bus-bar, affording a supply member 114, 116, 118 respectively, is located.

On the upper side the housing 108 spaced, parallel walls 121 define a plurality of transverse channels 122, in each of which a transverse connector member 120 is located.

The supply members 114, 116 and 118 are provided at longitudinally spaced intervals, corresponding to the spacing between adjacent transverse channels 122, with through-bores, and the connector members 120 are similarly provided with counter-bores 124, located longitudinally of the connector member.

Thus by the use of securing means, conveniently afforded by rivets 125 having shanks which pass through spacer members 124, each connector member 120 may be secured to one only of the supply member 114, 116 and 118, and it may be arranged during assembly that the connector members are so connected in the repeating sequence, 1,2,3, 1,2,3 ... In this way, no connector member 120 is connected to the same supply member as the connector member to which it is adjacent.

At one end portion each connector member 120 is provided with a connection portion 130, affording a connection surface 132 which lies in a plane which extends at right angles to the longitudinal axis of the connector member, and when the connector member 120 is located in position on the supply assembly within a channel 122, the connection portion 130 is located in a pocket 133 defining and output location for the busbar to which the connector member 120 is connected.

On the upper surface of the cover 110, the housing is provided with a mounting means 138, comprising a mounting formation 140, comprising outwardly-directed flanges 142a, 142b, together providing a flat upwardly-facing surface 144, in conventional manner.

The supply assembly comprises a plurality of circuit breakers 150 of the kind utilised with the assembly described in the specification of our aforementioned patent, comprising a housing 152 having generally flat, parallel-sided body provided on the underside thereof with a mounting recess 154, for mounting on the conventional "din-rail", the circuit breaker being provided with a contact member 166 projecting from the underside of the circuit breaker in a direction generally at right angles to the underside of the aperture 154, and beyond the plane of the underside.

Provided in the cover 110, at spaced intervals along the length thereof corresponding to the spacing between the channels 122 (Figure 1) and thus the width of the circuit breakers, are a plurality of narrow slots 136, so positioned that when a circuit breaker is moved into operative engagement with the mounting means, as generally described in the specification of our European patent, the contact member 166 passes through the slot 136 and into face-to-face engagement with the connection surface 132 of the connector member 120.

Provided in each pocket 133 is a spring clip 134, of generally U-shape although being provided with a planer rear surface and an out-flared entry portion, having a resilience such as to grip the connection portion 132 of the connector member, but being sufficiently resilient to enable a contact member 166 to pass between the spring clip and the connection portion. Thus the spring clip 134 may on assembly be simply dropped into the pocket 133, being opened to permit entry of the connection portion 130, and being further opened to permit entry of the contact member 166, to urge the contact member into face-to-face engagement with the connection portion.

At the opposite end portion each connector member 120 may be blanked off, whereby to be retained wholly within the housing, but conveniently some at least of the connection members, such as the first three, are provided with connection forks 190, whereby an isolator or similar supply device may be connected thereto. In this way the individual phases of the three phase supply may be connected to the three supply members 114, 116 and 118, to be distributed to various electric appliances by the circuit breakers.

It will be appreciated that, with such an arrangement, the phase which will be controlled by a circuit breaker will depend upon its linear position, and thus for convenience the cover may be provided with an indication as to the phase to be controlled, conveniently by the numbers 1, 2, 3 being printed adjacent to the apertures 136. Alternatively alpha characters, or colour coding may be utilised. If it is desired to supply electricity in two or more phases, a circuit breaker of appropriate width may be utilised, having the appropriate number of contact members 166, so as to enter two or three adjacent pockets 133, to pick up the appropriate phases from the connection members therein.

Conveniently the housing 108 comprises a second set of pockets 170, within which a further supply member 172 is located, similarly accessible through one of the series of narrow slots 137 in the cover, spring means 134 similarly being located within the pockets 170 of the second set in engagement with the supply member 172. By the provision of a second contact member 167 projecting from the underside of the circuit breaker 152, parallel and spaced outwardly from the contact member 166, this may be arranged to pass through the slot 137 into engagement with the supply member 172, which may conveniently be connected to a neutral terminal, whereby a one or more phase supply may be utilised, in which the live and neutral phases are switched.

The second embodiment is shown in Figures 3 and 4, is generally similar to the first embodiment above described, and similar numeral increased by 100 have been utilised to identify similar parts.

However in the second embodiment each connector member 220 is provided with a connection portion 230, lying in a plane extending generally at right angles to the longitudinal axis of the connector member, at both of its opposite ends. Further, whereas in the first embodiment the cover 110 of the housing is constructed to provide a single mounting means 138, in the second embodiment two mounting means 238a, 238b are provided, enabling two circuit breakers 250a, 250b to be mounted in each longitudinal position, with the contact members 266 thereof being capable of passing through the apertures 236 into engagement with each connection portion 230 of the connector member 220, being urged into face-to-face contact therewith, by the use of spring means 234.

However in the second embodiment, no additional neutral supply member is utilised, and thus no neutral switching is possible.

The supply assembly which is the third embodiment of this invention, shown in Figures 5 to 9, comprises a housing member 308 comprising exterior walls 310, 312 and four interior walls 314a, 314b, 314c and 314d dividing the housing member into four elongate channels 316a, 316b 316c and 316d. However, between the interior wall 314d and the exterior wall 312, a plurality of transverse walls 318 are provided, dividing the right hand most channel into a series of pockets 320, each pocket being separated from an adjacent pocket by twin walls.

Located in each of the channels 316a to 316d is a busbar 322a to 322d.

Located in each pocket 320 is a connector portion 324, said connector portion 324 forming part of a connector assembly consisting of the connector portion 324, a similar connector portion 326, and a bridge member 328, see Figure 5. Thus by mounting a connector portion 326 in a desired channel 316, it may be engaged with one, of the busbars 322, the bridging member 328 electrically connecting the two connector portions 324 and 326.

The housing assembly which is the third embodiment of this invention comprises a cover member 340 which provides a mounting means 344 of the conventional inverted top-hat shape, enabling a conventional circuit breaker 346 providing on its underside with the conventional recess 348, to be mounted thereon. As described in the specification of our European patent, the circuit breaker 346 comprises a contact element 350 projecting from an underside surface thereof, the cover member 340 providing a plurality of apertures 349 through which the contact member 350 may pass. As will be seen, the location of the apertures 349 is such that when the cover member 340 is clipped onto the housing member, conveniently by the use of a snap-fitting arrangement, the apertures 349 are positioned one directly over each pocket 320. In this manner when a circuit breaker 346 is mounted on the din-rail 344, the contact member 350 will pass through the aperture 349 and into engagement with one of the contact members 324, being connected through the intermediary of a bridge member and the associated contact member 326, into conductive contact with a desired busbar.

As is clear from Figure 5, the transverse walls 314a, 314b, 314c and 314d are provided in their outer edges with notches 315, of a width appropriate to providing a location means for the bridging members 328. In this manner the assembly may be built up relatively easily, with an appropriate location of the bridge members 328 being relatively easy to obtain, and on completion of fitting the cover member 340 onto the base member 308, movement of the bridge members from their notches is prevented, providing a firmer assembly, less prone to loose parts and rattling.

In this manner a housing assembly may be set up into any desired configuration, to provide electrical equipment to be mounted on the housing assembly with power at an appropriate phase or phases. By an appropriate pre-arrangement of the connector members, it may be so arranged that a connector member passing through any one of the apertures (say) 349a to 349l is brought into electrical contact with any desired one of the busbars 322a to 322d. Similarly, electrical equipment to which two or more phases need to be applied, may be provided with two or more connector elements 350 passing through adjacent apertures 349, and similarly being connected to the appropriate three phases of the electricity supply assembly.

Additionally, should the electricity supply requirement change, the housing assembly may relatively easily be disassembled, and the connector elements placed in positions appropriate to the new configuration.

In the present specification "comprise" means "includes or consists of" and "comprising" means "including or consisting of".

## Claims

1. An electricity supply assembly adapted for use with at least one circuit breaker (150, 250a, 250b, 346), the supply assembly comprising:
a) a housing (108, 208, 308);
b) a plurality of elongate supply members (114, 116, 118, 214, 216, 218, 322a, 322b, 322c, 322d) secured to the housing in side-by-side parallel relationship; and
c) a plurality of elongate connector members (120, 220, 324, 326, 328) extending transversely of the supply members and being secured thereto in sequence such that adjacent connector members are secured to different supply members, each connector member being provided with a connection portion (130, 230, 324),
**characterised in that** the housing is provided with a plurality of wall members defining pockets (133, 320), and a connection portion of a connector member is located in each pocket.

2. An electricity supply member according to claim 1 wherein each connector member is provided with a connection surface (132, 232, 330) and the connection surface of each connector member lies in a plane which extends at right angles to the length of the connector member and which lies parallel to the supply members and located to one side thereof.

3. An electricity supply member according to claim 1 or claim 2 wherein the housing provides a mounting means for the circuit breaker, and the mounting means (138, 344) comprises a conventional, inverted, top-hat configuration.

4. An electricity supply assembly according to claim 1 wherein the supply members (114, 116, 118, 214, 216, 218, 332a, 332b, 332c, 332d) comprise busbars and the connector members (120, 220, 324, 326, 328) are bolted to the busbars or are secured thereto by spring clips.

5. An electricity supply assembly according to any one of the preceding claims involving the use of connector members (120, 220, 324, 326, 328) of rectangular cross-section, having cross-sectional dimensions which differ by a factor of between 2 and 10, conveniently between 2 and 8, preferably about 5.

6. An electricity supply assembly according to any one of the preceding claims wherein the housing (108, 208, 308) provides or has secured thereto the mounting means (138, 238a, 238b, 344) which enables a conventional circuit breaker (150, 250a, 250b, 346) to be secured thereto with a contact member (166, 266, 350) of the circuit breaker passing into face-to-face conductive engagement with the connector members (120, 220, 324, 326, 328).

7. An electricity supply assembly according to any one of the preceding claims wherein the connection portion of each connector member provides the connection surface of the connector member.

8. An electricity supply assembly according to any one of the preceding claims incorporating an additional supply member (172) which is offset from the aforesaid plurality of supply members, to which a neutral connection is made.

9. An electricity supply assembly according to claim 8 wherein the additional supply member (172) is located in a supplementary housing (170) extending length-wise of the supply assembly.

10. An electricity supply assembly according to any one of claims 1 to 7 wherein on an opposite side of each connector member (220) to that upon which the connection surface (232) is provided, a second connection surface is provided with lies in a plane parallel to the supply members (214, 216, 218) and which is located on the opposite side thereof.

11. An electricity supply assembly according to claim 10 wherein the mounting means (238a, 238b,) enables a circuit breaker (250a, 250b) to be mounted on the supply assembly (214, 216, 218) in one of two positions, conveniently being spaced width-wise, and one of two orientations, in each of which positions it will be connected to a supply of electricity.

12. An electricity supply assembly according to any one of the preceding claims wherein the housing (108, 208, 308) is provided with a plurality of narrow slots (136, 236a, 236b, 349) so positioned that when the circuit breaker (150, 250a, 250b, 346) is moved into operative engagement with the mounting means, a contact member (116, 266, 350) of the circuit breaker passes through one of the slots, and into face-to-face engagement with the connection surface (132, 232, 330) of one of the connector members (120, 220, 324, 326, 328).

13. An electricity supply assembly according to any one of the preceding claims wherein the supply assembly comprises
a) a housing member (108, 308) providing location means for the plurality of supply members (114, 116, 118, 322a, 322b, 322c, 322d);
b) a plurality of output locations in the form of the pockets (133, 320) disposed length-wise of the supply members and providing means into one of which a contact member (116, 350) of the circuit breaker (150, 346) is located.

14. An electricity supply assembly according to claim 13, wherein the housing member (108, 308) is provided with a plurality of channels (112a, 112b, 112c, 316a, 316b, 316c, 316d), one for each supply member (114, 116, 118, 322a, 322b, 322c, 322d), extending length-wise of the housing member, with each pocket (133, 320) being disposed width-wise of the supply members.

15. An electricity supply assembly according to claim 14 wherein each connector member (220) comprises two connector portions (324, 326), one adapted to be located in one of the channels (314a) to be engaged with a supply member (322a) therein, one being adapted to be located in one of the pockets (320), and a bridge member (328) adapted to be entered into conductive engagement with the two connector portions when so in position.

## Revendications

1. Ensemble de distribution d'électricité adapté pour l'utilisation avec au moins un disjoncteur (150, 250a, 250b, 346), l'ensemble de distribution comprenant:
a) un logement (108, 208, 308) ;
b) une pluralité d'éléments de distribution allongés (114, 116, 118, 214, 216, 218, 322a, 332b, 322c, 322d) fixés au logement dans une relation parallèle côte à côte ; et
c) une pluralité d'éléments de connecteur allongés (120, 220, 324, 326, 328) s'étendant transversalement par rapport aux éléments de distribution et étant fixés sur ceux-ci en séquence de sorte que des éléments de connecteur adjacents soient fixés à des éléments de distribution différents, chaque élément de connecteur étant muni d'une partie de connexion (130, 230, 324),
**caractérisé en ce que** le logement est muni d'une pluralité d'éléments de paroi définissant des cases (133, 320) et **en ce qu'**une partie de connexion d'un élément de connexion est située dans chaque case.

2. Ensemble de distribution d'électricité selon la revendication 1, dans lequel chaque élément de connecteur est muni d'une surface de connexion (132, 232, 330) et la surface de connexion de chaque élément de connecteur se trouve dans un plan qui s'étend à angle droit par rapport à la longueur de l'élément de connecteur et qui est parallèle aux éléments de distribution et situé sur un côté de celui-ci.

3. Ensemble de distribution d'électricité selon la revendication 1 ou 2, dans lequel le logement fournit un moyen de montage pour le disjoncteur, et le moyen de montage (133, 344) comprend une configuration en chapeau renversé traditionnelle.

4. Ensemble de distribution d'électricité selon la revendication 1, dans lequel les éléments de distribution (114, 116, 118, 214, 216, 218, 332a, 332b, 332c, 332d) comprennent des barres collectrices et les éléments de connecteur (120, 220, 324, 326, 328) sont boulonnés sur les barres collectrices ou sont fixées à celles-ci par des attaches élastiques.

5. Ensemble de distribution d'électricité selon l'une quelconque des revendications précédentes, dans lequel l'utilisation d'éléments de connecteur (120, 220, 324, 326, 328) de section transversale rectangulaire, ayant des dimensions de section transversale qui différent d'un facteur entre 2 et 10, avantageusement entre 2 et 8, de préférence d'environ 5.

6. Ensemble de distribution d'électricité selon l'une quelconque des revendications précédentes, dans lequel le logement (108, 208, 308) fournit ou a fixé sur celui-ci le moyen de montage (138, 238a, 238b, 344) qui permet de fixer à celui-ci un disjoncteur traditionnel (150a, 250a, 250b, 346) avec un élément de contact (166, 266, 350) du disjoncteur passant dans un engagement face à face avec les éléments de connecteur (120,220,324,326,328).

7. Ensemble de distribution d'électricité selon l'une quelconque des revendications précédentes, dans lequel la partie de connexion de chaque élément de connecteur fournit la surface de connexion de l'élément de connecteur.

8. Ensemble de distribution d'électricité selon l'une quelconque des revendications précédentes, incorporant un élément de distribution additionnel (172) qui est décalé par rapport à ladite pluralité d'éléments de distribution, sur lequel est réalisée une connexion du neutre.

9. Ensemble de distribution d'électricité selon la revendication 1, dans lequel l'élément de distribution additionnel (172) est situé dans un logement supplémentaire (170) s'étendant dans le sens de la longueur de l'ensemble de distribution:

10. Ensemble de distribution d'électricité selon l'une quelconque des revendications 1 à 7, dans lequel sur un côté de chaque élément de connecteur (220), opposé à celui sur lequel la surface de connexion (232) est disposée, une deuxième surface de connexion est disposée qui se trouve dans un plan parallèle aux éléments de distribution (214, 216, 218) et qui est située sur le côté opposé de ceux-ci.

11. Ensemble de distribution d'électricité selon la revendication 1, dans lequel le moyen de montage (238a, 238b) permet de monter un disjoncteur (250a, 250b) sur l'ensemble de distribution (214, 216, 218) dans l'une de deux positions, étant avantageusement espacées longitudinalement, et l'une de deux orientations, dans chacune desquelles positions il sera connecté à une alimentation d'électricité.

12. Ensemble de distribution d'électricité selon l'une quelconque des revendications précédentes, dans lequel le logement (108, 208, 308) est pourvu d'une pluralité de fentes étroites (136, 236a, 236b, 349) positionnées de telle manières que, quand le disjoncteur (150, 250a, 250b, 346) est déplacé dans un engagement de fonctionnement avec le moyen de montage, un élément de contact (116, 266, 350) du disjoncteur passe à travers une des fentes et dans un engagement face à face avec la surface de connexion (132, 232, 330) d'un des éléments de connecteur (120, 220, 324,326,328).

13. Ensemble de distribution d'électricité selon l'une quelconque des revendications précédentes, dans lequel l'ensemble de distribution comprend :
a) un élément de logement (108, 308) fournissant des moyens de position pour la pluralité d'éléments de distribution (114, 116, 118, 322a, 322b, 322c, 322d) ;
b) une pluralité de positions de sortie sous la forme de cases (133, 320) disposées dans le sens de la longueur des éléments de distribution et fournissant des moyens dans un desquels un élément de contact (116, 350) du disjoncteur (150, 346) est situé.

14. Ensemble de distribution d'électricité selon la revendication 13, dans lequel l'élément de logement (108, 308) est pourvu d'une pluralité de canaux (112a, 112b, 112c, 316a, 316b, 316c, 316d), un pour chaque élément de distribution (114, 116, 118, 322a, 322b, 322c, 322d), s'étendant dans le sens de la longueur de l'élément de logement, avec chaque case (133, 320) étant disposée dans le sens de la longueur des éléments de distribution.

15. Ensemble de distribution d'électricité selon la revendication 14, dans lequel chaque élément de connecteur (220) comprend deux parties de connecteur (324, 326), une adaptée pour être positionnée dans un des canaux (314a) pour être engagée avec un élément de distribution (322a) dans celui-ci, une étant adaptée pour être positionnée dans une des cases (320), et un élément de pont (328) adapté pour être introduit en engagement conducteur avec les deux parties de connecteur quand elles sont ainsi en position.

## Patentansprüche

1. Stromversorgungsanordnung zur Verwendung mit mindestens einem Schutzschalter (150, 250a, 250b, 346), wobei die Stromversorgungsanordnung umfaßt:
a) ein Gehäuse (108, 208, 308);
b) eine Vielzahl von länglichen Versorgungsteilen (114, 116, 118, 214, 216, 218, 322a, 322b, 322c, 322c), die an dem Gehäuse in einer parallelen Beziehung nebeneinander gesichert sind; und
c) eine Vielzahl von länglichen Abschlußteilen (120, 220, 324, 326, 328), die sich quer zu den Versorgungsteilen erstrecken und daran der Reihe nach so gesichert sind, daß benachbarte Anschlußteile an unterschiedlichen Versorgungsteilen gesichert sind, wobei jedes Anschlußteil mit einem Anschlußabschnitt (130, 230, 324) versehen ist,
**dadurch gekennzeichnet, daß** das Gehäuse mit einer Vielzahl von Wandteilen versehen ist, die Taschen (133, 320) bilden, und ein Anschlußabschnitt eines Anschlußteils in jeder Tasche angeordnet ist.

2. Stromversorgungsanordnung nach Anspruch 1, **dadurch gekennzeichnet, daß** jedes Anschlußteil mit einer Anschlußfläche (132, 232, 330) versehen ist und die Anschlußfläche jedes Anschlußteils in einer Ebene liegt, die sich unter rechtswinklig zur Länge des Anschlußteils erstreckt und die parallel zu den Versorgungsteilen liegt und an einer Seite derselben angeordnet ist.

3. Stromversorgungsanordnung nach Anspruch 1 oder Anspruch 2, **dadurch gekennzeichnet, daß** das Gehäuse eine Montageeinrichtung für den Schutzschalter liefert und die Montageeinrichtung (138, 344) eine herkömmliche, umgekehrte, Zylinderkonfiguration umfaßt.

4. Stromversorgungsanordnung nach Anspruch 1, **dadurch gekennzeichnet, daß** die Versorgungsteile (114, 116, 118, 214, 216, 218, 332a, 332b, 332c, 332d) Sammelschienen umfassen und die Anschlußteile (120, 220, 324, 326, 328) an die Sammelschienen geschraubt oder daran durch Federklips gesichert sind.

5. Stromversorgungsanordnung nach einem der vorangehenden Ansprüche, **dadurch gekennzeichnet, daß** sie die Verwendung von Anschlußteilen (120, 220, 324, 326, 328) mit rechteckigem Querschnitt mit Querschnittsabmessungen umfaßt, die sich um einen Faktor von zwischen 2 und 10, zweckmäßigerweise zwischen 2 und 8, vorzugsweise um ungefähr 5, unterscheiden.

6. Stromversorgungsanordnung nach einem der vorangehenden Ansprüche, **dadurch gekennzeichnet, daß** das Gehäuse (108, 208, 308) die Montageeinrichtungen (138, 238a, 238b, 344) liefert oder daran gesichert aufweist, wodurch ermöglicht wird, daß ein herkömmlicher Schutzschalter (150, 250a, 250b, 346) daran sicherbar ist, wobei ein Kontaktteil (166, 266, 350) des Schutzschalters in flächigem leitendem Eingriff mit den Anschlußteilen (120, 220, 324, 326, 328) tritt.

7. Stromversorgungsanordnung nach einem der vorangehenden Ansprüche, **dadurch gekennzeichnet, daß** der Anschlußabschnitt jedes Anschlußteils die Anschlußfläche des Anschlußteils liefert.

8. Stromversorgungsanordnung nach einem der vorangehenden Ansprüche, **dadurch gekennzeichnet, daß** sie ein zusätzliches Versorgungsteil (172) enthält, das von der obengenannten Vielzahl von Versorgungsteilen versetzt ist und mit dem ein Nullanschluß hergestellt wird.

9. Stromversorgungsanordnung nach Anspruch 8, **dadurch gekennzeichnet, daß** das zusätzliche Versorgungsteil (172) in einem zusätzlichen Gehäuse (170) angeordnet ist, daß sich in Längsrichtung der Versorgungsanordnung erstreckt.

10. Stromversorgungsanordnung nach einem der Ansprüche 1 bis 7, **dadurch gekennzeichnet, daß** auf einer zu derjenigen, auf der die Anschlußfläche (232) vorgesehen ist, gegenüberliegenden Seite jedes Anschlußteils (220) eine zweite Anschlußfläche vorgesehen ist, die in einer zu den Versorgungsteilen (214, 216, 218) parallelen Ebene liegt und auf der gegenüberliegenden Seite derselben angeordnet ist.

11. Stromversorgungsanordnung nach Anspruch 10, **dadurch gekennzeichnet, daß** die Montageeinrichtung (238, 238b) ermöglicht, daß ein Schutzschalter (250a, 250b) an der Versorgungsanordnung (214, 216, 218) in einer von zwei Positionen, die zweckmäßigerweise in Richtung der Breite beabstandet sind, und einer von zwei Orientierungen montierbar ist, wobei er in jeder der Positionen mit einer Stromversorgung verbunden sein wird.

12. Stromversorgungsanordnung nach einem der vorangehenden Ansprüche, **dadurch gekennzeichnet, daß** das Gehäuse (108, 208, 308) mit einer Vielzahl von schmalen Schlitzen (136, 236a, 236b, 349) versehen ist, die so positioniert sind, daß, wenn der Schutzschalter (150, 250a, 250b, 346) in Wirkeingriff mit der Montageeinrichtung bewegt wird, ein Kontaktteil (116, 266, 350) des Schutzschalters durch einen der Schlitze und in flächigem Eingriff mit der Anschlußfläche (132, 232, 330) von einem der Anschußteile (120, 220 324, 326, 328) tritt.

13. Stromversorgungsanordnung nach einem der vorangehenden Ansprüche, **dadurch gekennzeichnet, daß** die Versorgungsanordnung umfaßt:
a) ein Gehäuseteil (108, 308), das Aufnahmemittel für die Vielzahl von Versorgungsteilen (114, 116, 118, 322a, 322b, 322c, 322d) liefert;
b) eine Vielzahl von Ausgabeorten in Form der Taschen (133, 320) umfaßt, die in Längsrichtung der Versorgungsteile angeordnet sind und Einrichtungen liefern, in denen ein Kontaktteil (116, 350) des Schutzschalters (150, 346) angeordnet ist.

14. Stromversorgungsanordnung nach Anspruch 13, **dadurch gekennzeichnet, daß** das Gehäuseteil (108, 308) mit einer Vielzahl von Kanälen (112a, 112b, 112c, 316a, 316b, 316c, 316d), einer für jedes Versorgungsteil (114, 116, 118, 322a, 322b, 322c, 322d), versehen ist, die sich in Längsrichtung des Gehäuseteils erstrecken, wobei jede Tasche (133, 320) in Richtung der Breite der Versorgungsteile angeordnet ist.

15. Stromversorgungsanordnung nach Anspruch 14, **dadurch gekennzeichnet, daß** jedes Anschlußteil (220) zwei Anschlußabschnitte (324, 326) umfaßt, wobei einer gestaltet ist, um in einem der Kanäle (314a) angeordnet und mit einem Versorgungsteil (322a) darin in Eingriff gebracht zu werden, wobei einer gestaltet ist, um in einer der Taschen (320) angeordnet zu werden, und ein Brückenteil (328) gestaltet ist, um in leitendem Eingriff mit den zwei Anschlußabschnitten in dieser Position gebracht zu werden.
